# EUROPEAN PATENT APPLICATION

(11) **EP 2 400 464 A2**
(43) Date of publication of application: **28.12.2011**
(21) Application number: 11170591.9
(22) Date of filing: 20.06.2011
(51) Int. Cl.: G06T 19/00

(54) **Spatial association between virtual and augmented reality**

(30) Priority: 25.06.2010 US 823939
(71) Applicant: Palo Alto Research Center Incorporated, Palo Alto, California 94304 (US)
(72) Inventor: Roberts, Michael, Los Gatos, CA California 95033 (US); Begole, James, Los Altos, CA California 94204 (US); Chu, Maurice, Burlingame, CA California 94010 (US); Kletter, Doron, San Mateo, CA California 94402 (US)
(74) Representative: Skone James, Robert Edmund

(57) **Abstract**

One embodiment of the present invention provides a system that facilitates interaction between two entities located away from each other. The system includes a virtual reality system (114), an augmented reality system (120), and an object-state-maintaining mechanism. During operation, the virtual reality system (114) displays an object associated with a real-world object. The augmented reality system (120) displays the object based on a change to the state of the object. The object-state-maintaining mechanism determines the state of the object and communicates a state change to the virtual reality system, the augmented reality system, or both. A respective state change of the object can be based on one or more of: a state change of the real-world object; a user input to the virtual reality system or the augmented reality system; and an analysis of an image of the real-world object.

## Description

### Field

The present disclosure relates to a system and technique for maintaining dynamic spatial association or 'awareness' between a virtual reality application and an augmented reality application.

### Related Art

During conventional assisted servicing of a complicated device, an expert technician is physically collocated with a novice to explain and demonstrate by physically manipulating the device. However, this approach to training or assisting the novice can be expensive and time-consuming because the expert technician often has to travel to a remote location where the novice and the device are located.

In principle, remote interaction between the expert technician and the novice is a potential solution to this problem. However, the information that can be exchanged using existing communication techniques is often inadequate for such remotely assisted servicing. For example, during a conference call audio, video, and text or graphical content are typically exchanged by the participants, but three-dimensional spatial relationship information, such as the spatial interrelationship between components in the device (e.g., how the components are assembled) is often unavailable. This is a problem because the expert technician does not have the ability to point and physically manipulate the device during a remote servicing session. Furthermore, the actions of the novice are not readily apparent to the expert technician unless the novice is able to effectively communicate his actions. Typically, relying on the novice to verbally explain his actions to the expert technician and vice versa is not effective because there is a significant knowledge gap between the novice and the expert technician. Consequently, it is often difficult for the expert technician and the novice to communicate regarding how to remotely perform servicing tasks.

Hence, what is needed is a method and a system that facilitates such remote interaction between users to overcome the problems listed above.

One embodiment of the present invention provides a system that facilitates interaction between two entities located away from each other. The system includes a virtual reality system, an augmented reality system, and an object-state-maintaining mechanism. During operation, the virtual reality system displays an object associated with a real-world object. The augmented reality system displays the object based on a change to the state of the object. The object-state-maintaining mechanism determines the state of the object and communicates a state change to the virtual reality system, the augmented reality system, or both. A respective state change of the object can be based on one or more of: a state change of the real-world object; a user input to the virtual reality system or the augmented reality system; and an analysis of an image of the real-world object.

In one variation of this embodiment, the virtual reality system allows a user to manipulate the displayed object and communicate information indicative of a state change of the object corresponding to the user manipulation to the object-state-maintaining mechanism. The object-state-maintaining mechanism is configured to communicate the received information indicative of the state change to the augmented reality system. Furthermore, the augmented reality system updates the displayed object based on the received information indicative of the state change.

In a further variation, the information indicative of the state change comprises a set of parameters which can be used to identify the object and a state of the object.

In a variation of this embodiment, the object-state-maintaining mechanism further comprises a scene recognition engine which determines a model for the object and communicates information indicative of the model to the virtual reality system, the augmented reality system, or both.

In a variation of this embodiment, the augmented reality system includes a machine vision mechanism which captures an image of the real-world object. In addition, the augmented reality system communicates the image or a set of parameters that can be used to identify the real-world object and a state of the real-world object to the object-state-maintaining mechanism.

In a variation of this embodiment, the virtual reality system and the augmented reality system are both configured to display the object in a three-dimension (3D) display environment.

In a variation of this embodiment, the object-state-maintaining mechanism resides in a server which is coupled to the virtual reality system and the augmented reality system via a network.

### BRIEF DESCRIPTION OF THE FIGURES

FIG. 1 is a block diagram illustrating a system in accordance with an embodiment of the present disclosure.

FIG. 2 is a flow chart illustrating a method for maintaining a dynamic spatial association between a virtual reality application and an augmented reality application in the system of FIG. 1 in accordance with an embodiment of the present disclosure.

FIG. 3 is a block diagram illustrating a computer system that performs the method of FIG. 2 in accordance with an embodiment of the present disclosure.

FIG. 4 is a block diagram illustrating a data structure for use in the computer system of FIG. 3 in accordance with an embodiment of the present disclosure.

Note that like reference numerals refer to corresponding parts throughout the drawings. Moreover, multiple instances of the same part are designated by a common prefix separated from an instance number by a dash.

Embodiments of a system, a method, and a computer-program product (*e.g*., software) for maintaining a dynamic spatial association or 'awareness' between a virtual reality application and an augmented reality application are described. In this association technique, a world model (such as a three-dimensional space) that includes a state of an object is used to generate and provide instructions for displaying the object, via the augmented reality application, to a user in a physical environment, and instructions for displaying the object, via the virtual reality application, to another user. When an input that is associated with a change to the state of the object is subsequently received from either user, the world model is revised to reflect this change. For example, the change to the state may be specified in the input or may be determined using a state identifier. Then, revised instructions for the augmented reality application and the virtual reality application are generated and provided to the users, thereby maintaining the dynamic spatial association.

By maintaining the dynamic spatial association, this association technique facilitates collaboration between the users, such as users at locations remote from each other. For example, the other user may be an expert or an instructor who guides the first user through a complicated sequence of operations that are performed by the first user on a physical object that is associated with the object. Thus, the association technique may facilitate training, maintenance or surgery without requiring that the expert or instructor and the user be at the same location.

In the discussion that follows, a virtual environment (which is also referred to as a 'virtual world' or 'virtual reality' application) should be understood to include an artificial reality that projects a user into a space (such as a three-dimensional space) generated by a computer. Furthermore, an augmented reality application should be understood to include a live or indirect view of a physical environment whose elements are augmented by superimposed computer-generated information (such as supplemental information, an image or information associated with a virtual reality application).

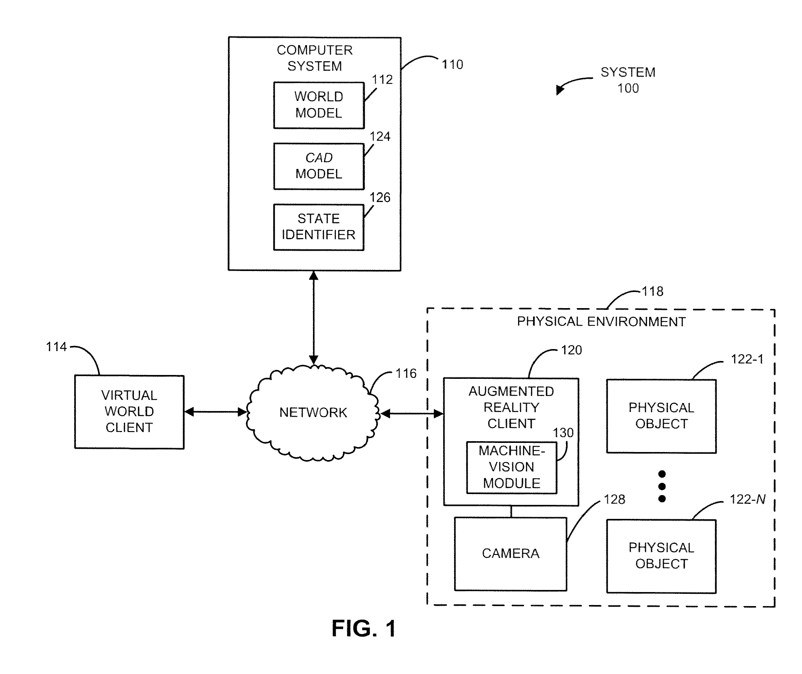

We now discuss embodiments of the system. FIG. 1 presents a block diagram illustrating a system 100 (which is sometimes referred to as a 'multi-user virtual world server system'). In this system, users of a virtual world client 114 (that displays a virtual environment) and an augmented reality client 120 (that displays an augmented reality application) at a remote location interact, via network 116, though a shared framework. In particular, computer system 110 (such as a server) maintains a world model 112 that represents the state of one or more computer objects that are associated with physical object(s) 122 in physical environment 118 that are being modified by one or more users (such as the modifications that occur during remote servicing). For example, world model 112 may correspond to a two- or three-dimensional space. (However, in some embodiments world model 112 can be more abstract, for example, a hyper-geometric space that corresponds to multiple parameters, such as a representation of stock trading or the function of a power plant.)

Furthermore, computer system 110 dynamically (*e.g.,* in real time) shares any changes to the state associated with actions of the one or more users of augmented reality client 120 and/or the one or more other users of virtual world client 114 (which, from the perspective of computer system 110, are collectively referred to as 'inputs') with both virtual world client 114 and augmented reality client 120 by: generating instructions (or commands) for displaying the objects via augmented reality client 120 to the users in physical environment 118; generating instructions for displaying the objects via virtual world client 114; and providing the instructions, respectively, to virtual world client 114 and augmented reality client 120, thereby maintaining the dynamic spatial association or 'awareness' between the augmented reality application and the virtual reality application.

Note that virtual world client 114 may be an electronic device that: interfaces with computer system 110; keeps the displayed state of the one or more objects in the virtual reality application synchronized with world model 112; and displays the virtual reality application using a multi-dimensional rendering technique. Furthermore, virtual world client 114 can capture interactions of users with the objects in the virtual reality application, such as users' selections and gestures, and can relay these interactions to computer system 110, which updates world model 112 as needed, and distributes instructions that reflect any changes to both virtual world client 114 and augmented reality client 120.

Additionally, augmented reality client 120 may be an electronic device that can: capture real-time video using a camera 128; perform registration on the scene using a processing unit that executes instructions for a machine-vision module 130; and display information or images associated with world model 112 (such as specific objects, assembly instructions, gesture information from the one or more other users of virtual world client 114, etc.) along with the captured video (including overlaying and aligning the information and images with the captured video). For example, machine-vision module 130 may work in conjunction with a computer-aided-design *(CAD)* model 124 of the one or more physical objects 122 to: register a camera in augmented reality client 120 relative to the one or more physical objects 122; associate image features to relevant features on *CAD* model 124 *(e.g.,* by using point features); and generate a set of correspondences between the scene geometry and *CAD* model 124. Furthermore, a user can interact with augmented reality client 120 by selecting information (using a touch screen, a mouse, etc.) or changing the view to a particular area of physical environment 118. This information is relayed to computer system 110, which updates world model 112 as needed, and distributes instructions that reflect any changes to both virtual world client 114 and augmented reality client 120.

Thus, changes to the state of the objects in world model 112 may be received from virtual world client 114 and/or augmented reality client 120. These changes can be determined using a variety of techniques. For example, computer system 110 may include a state identifier 126 that determines the change to the state of the one or more objects. In some embodiments, determining the change to state may involve selecting one of a predetermined set of states (such as different closed or exploded views of components in a complicated device). However, in some embodiments the input(s) received from virtual world client 114 and/or augmented reality client 120 specifies the change(s) to the state of the objects so that it may not be necessary to determine them or to predetermine them (for example, the input may include feature vectors of an object which can be used to identify and characterize the object). In these embodiments, the state identifier may be included in virtual world client 114 and/or augmented reality client 120.

In an exemplary embodiment, the input to computer system 110 may include an image of the one or more physical objects 122 in physical environment 118 (which may be captured using a machine vision system), and state identifier 126 may include a scene identifier. This scene identifier may analyze the image to determine the change to the state of the objects. For example, the scene identifier may recognize the objects that augmented reality client 120 is imaging, and may instruct computer system 110 to load the appropriate three-dimensional model of the scene for use in world model 112. Additionally, another input from augmented reality client 120 may include information about the state of the one or more physical objects 122 (such as information determined by one or more sensors). In these embodiments, state identifier 126 may analyze either the image and/or the other input to determine the change to the state of the object.

Furthermore, constraint information from *CAD* model 124 may be used to render the one or more objects in different orientations or configurations, which may be used by state identifier 126 when determining the change to the state of the one or more objects. Alternatively or additionally, the image may include spatial registration information (such as marker- or non-marker-based registration information) that specifies an orientation in physical environment 118 and/or the virtual reality application. This registration information may be used by state identifier 126 when determining the change to the state. Thus, computer system 110 may be able to track an orientation of the camera in augmented reality client 120 relative to the scene (and, thus, world model 112).

In some embodiments, the users may interact with their respective environments (such as the one or more objects or the one or more physical objects 122) during multiple sessions. In this case, state identifier 126 may be used to determine the state of the one or more objects at the start of a current session, and computer system 110 may accordingly update world model 112.

Furthermore, in some embodiments there is a discontinuous change in the state of the one or more objects from a preceding image in a sequence of images. For example, this discontinuous change may be associated with a temporary visual obstruction of the one or more physical objects 122 during the sequence of images (such as when one of the one or more users steps in front of the camera). In this case, state identifier 126 may be used to update the state of the one or more objects to reflect the discontinuous change.

Thus, the multi-user virtual world server system maintains the dynamic spatial association between the augmented reality application and the virtual reality application so that the users of virtual world client 114 and augmented reality client 120 can interact with their respective environments and, therefore, with each other. During this interaction, the augmented reality application can be used as an 'input' to computer system 110 (resulting in the accessing and loading of information into virtual world client 114 that reflects the one or more physical objects 122 being modified). Alternatively, the virtual reality application can be used as an 'input' to computer system 110 (resulting in the accessing and loading of information into augmented reality client 120 that reflects changes to the one or more objects). In some embodiments, users of virtual world client 114 and augmented reality client 120 can interact with the 'content' in their respective environments using Wiki-like functionality.

Note that the 'content' that is displayed in the virtual reality application and the augmented reality application is not necessarily limited to three-dimensional models, but can include: CAD information, servicing information (or other related information), documents (such as web pages), text, audio, music, images, and/or temporal image information (such as an animation sequence). Moreover, this data may be compatible with a variety of formats, including: image formats (such as a Joint Photographic Experts Group standard), video formats (such as a Moving Pictures Expert Group standard), and word-processing or information-display formats (such as Adobe Acrobat^{TM}, from Adobe Systems, Inc. of San Jose, California).

In some embodiments, virtual world client 114 and/or augmented reality client 120 are client computers that interact with computer system 110 in a client-server architecture. A given client computer may include a software application that is resident on and which executes on the given client computer. This software application may be a stand-alone program or may be embedded in another software application. Alternatively, the software application may be a software-application tool that is embedded in a web page (e.g., the software application may execute in a virtual environment provided by a web browser). In an illustrative embodiment, the software-application tool is a software package written in: JavaScript ^{TM} (a trademark of Oracle Corporation of Redwood City, CA), e.g., the software-application tool includes programs or procedures containing JavaScript instructions, ECMAScript (the specification for which is published by the European Computer Manufacturers Association International), VBScript ^{TM} (a trademark of Microsoft, Inc. of Redmond, Washington) or any other client-side scripting language. In other words, the embedded software-application tool may include programs or procedures containing: JavaScript, ECMAScript instructions, VBScript instructions, or instructions in another programming language suitable for rendering by the web browser or another client application on the client computers.

In an exemplary embodiment, the one or more physical objects 122 include a complicated object with multiple inter-related components or components that have a spatial relationship with each other. By interacting with this complicated object, the users can transition interrelated components in world model 112 into an exploded view. Alternatively or additionally, the users can highlight: different types of components, components having different materials or properties and/or components having different functions.

Using these features the users may be able to collaboratively convey topography information about the complicated object and/or spatial relationships between the components in the complicated object. This capability may allow users of system 100 to collaboratively or interactively modify or generate content in applications, such as: an online encyclopedia, an online user manual, remote maintenance or servicing, remote training and/or remote surgery.

For example, using system 100 an expert technician who is using virtual world client 114 can remotely train a novice who is using augmented reality client 120. (Alternatively, the expert technician may use augmented reality client 120 and the novice may use virtual world client 114.) In the process, the expert technician and the novice can close the knowledge gap between them, allowing them to accurately communicate as they remotely work through the operations in a complicated repair or servicing process. (However, in some embodiments the expert technician and the novice may be working in close proximity, such as at the same location.)

Thus, if the remote expert technician determines that a paper tray on a multi-function device must be removed by the novice, he may be able to visually indicate which one of the multiple trays needs attention (for example, by clicking on the appropriate tray in the virtual reality application, which shows up as a highlighted overlay on the corresponding paper tray in the augmented reality application). This is far more effective than attempting to verbally describe which tray to remove. Furthermore, the expert technician may indicate additional operations via virtual world client 114 that result in animated overlays on the novice's augmented reality client 120. Also note that this system may allow the expert technician to indirectly perform a servicing task by interacting with a three-dimensional model of the one or more physical objects 122 (as opposed to interacting directly with the one or more physical objects 122). This feature may be useful when servicing large or specific devices or machines, such as those contained, for example, in ships.

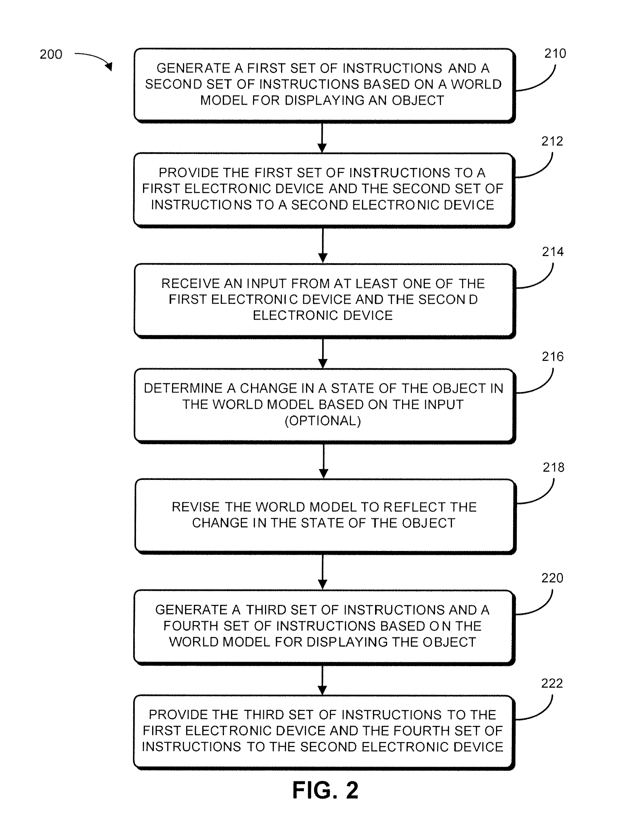

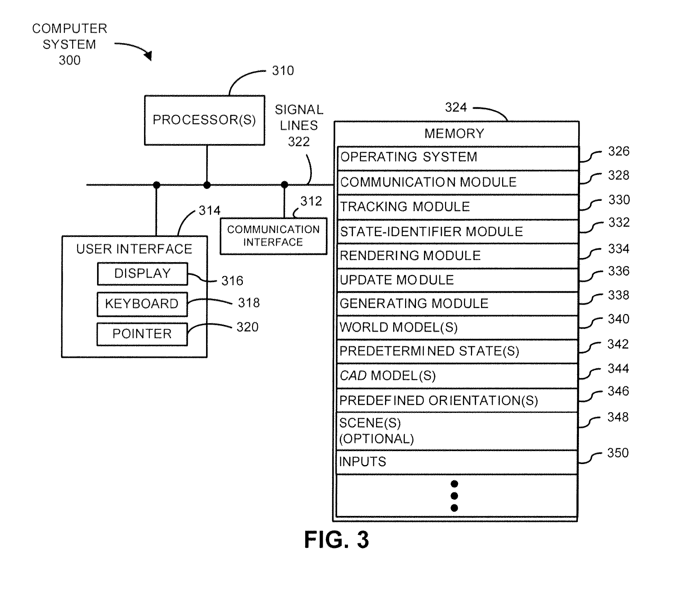

We now discuss embodiments of the method. FIG. 2 presents a flow chart illustrating a method 200 for maintaining a dynamic spatial association between a virtual reality application and an augmented reality application in system 100 (FIG. 1), which may be performed by a computer system (such as computer system 110 in FIG. 1 or computer system 300 in FIG. 3). During operation, the computer system generates a first set of instructions for displaying an object, via the augmented reality application, to a user in a physical environment based on a world model that includes a state of the object, and generates a second set of instructions for displaying the object, via the virtual reality application, to another user based on the world model (operation 210). Then, the computer system provides the first set of instructions to a first electronic device associated with the augmented reality application and the second set of instructions to a second electronic device associated with the virtual reality application (operation 212).

Subsequently, the computer system receives an input from at least one of the first electronic device and the second electronic device that is associated with a change to the state of the object (operation 214). In some embodiments, the computer system optionally determines the change to the state of the object in the world model based on the input (operation 216). For example, the input may include an image of a physical object from the augmented reality application, and the computer system may analyze the image using a state identifier. Furthermore, determining the change to the state of the object may involve selecting one of a predetermined set of states. Alternatively, the input may specify the change to the state of the object.

In response to the input, the computer system revises the world model to reflect the change to the state of the object (operation 218). Next, the computer system generates a third set of instructions for displaying the object to the user based on the revised world model, and generates a fourth set of instructions for displaying the object to the other user based on the revised world model (operation 220). Moreover, the system provides the third set of instructions to the first electronic device and the fourth set of instructions to the second electronic device (operation 222), thereby maintaining the dynamic spatial association between the augmented reality application and the virtual reality application.

In some embodiments of method 200 there may be additional or fewer operations. Moreover, the order of the operations may be changed, and/or two or more operations may be combined into a single operation.

We now describe embodiments of the computer system and its use. FIG. 3 presents a block diagram illustrating a computer system 300 that performs method 200 (FIG. 2). This computer system includes: one or more processors 310, a communication interface 312, a user interface 314, and one or more signal lines 322 coupling these components together. Note that the one or more processing units 310 may support parallel processing and/or multi-threaded operation, the communication interface 312 may have a persistent communication connection, and the one or more signal lines 322 may constitute a communication bus. Moreover, the user interface 314 may include: a display 316 (such as a touch-sensitive display), a keyboard 318, and/or a pointer 320, such as a mouse.

Memory 324 in the computer system 300 may include volatile memory and/or non-volatile memory. More specifically, memory 324 may include: *ROM, RAM, EPROM, EEPROM,* flash, one or more smart cards, one or more magnetic disc storage devices, and/or one or more optical storage devices. Memory 324 may store an operating system 326 that includes procedures (or a set of instructions) for handling various basic system services for performing hardwaredependent tasks. In some embodiments, the operating system 326 is a real-time operating system. Memory 324 may also store communication procedures (or a set of instructions) in a communication module 328. These communication procedures may be used for communicating with one or more computers, devices and/or servers, including computers, devices and/or servers that are remotely located with respect to the computer system 300.

Memory 324 may also include multiple program modules (or sets of instructions), including: tracking module 330 (or a set of instructions), state-identifier module 332 (or a set of instructions), rendering module 334, update module 336 (or a set of instructions), and/or generating module 338 (or a set of instructions). Note that one or more of these program modules may constitute a computer-program mechanism.

During operation, tracking module 330 receives one or more inputs 350 from virtual world client 114 (FIG. 1) and/or augmented reality client 120 (FIG. 1) via communication module 328. Then, state-identifier module 332 (or a set of instructions) determines a change to the state of one or more objects in one of world models 340. In some embodiments, the one or more inputs 350 include images of the one or more physical objects 122 (FIG. 1), and state-identifier module 332 may determine the change to the state using: one or more optional scenes 348, predefined orientations 346; and/or one or more *CAD* models 344. For example, rendering module 334 may render optional scenes 348 using the one or more *CAD* model 344 and predefined orientations 346, and state-identifier module 332 may determine the change to the state by comparing the one or more images 350 with optional scenes 348. Alternatively or additionally, state-identifier module 332 may determine the change in the state using one or more predetermined states 342 of the one or more objects.

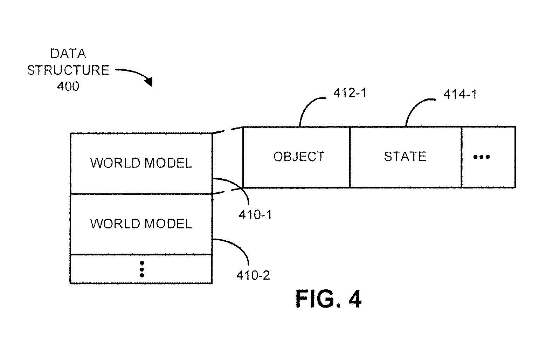

Based on the determined change(s), update module 336 may revise one or more of world models 340. For example, update module 336 may select a different predefined world model in a group of world models. These world models are shown in FIG. 4, which presents a block diagram illustrating a data structure 400. In particular, each of world models 410 may include one or more pairs of objects 412 and associated states 414.

Next, generating module 338 may generate instructions for virtual world client 114 (FIG. 1) and/or augmented reality client 120 (FIG. 1) based on one or more of world models 340. These instructions may, respectively, display: the one or more objects via augmented reality client 120 (FIG. 1) to the one or more users in physical environment 118 (FIG. 1), and the one or more objects via virtual world client 114 (FIG. 1) to one or more other users. Furthermore, communication module 328 may provide the generated instructions to virtual world client 114 (FIG. 1) and/or augmented reality client 120 (FIG. 1). In this way, computer system 300 may maintain the dynamic spatial association or 'awareness' between the augmented reality application and the virtual reality application.

Instructions in the various modules in memory 324 may be implemented in: a high-level procedural language, an object-oriented programming language, and/or in an assembly or machine language. This programming language may be compiled or interpreted, i.e., configurable or configured, to be executed by the one or more processing units 310.

Although computer system 300 is illustrated as having a number of discrete items, FIG. 3 is intended to be a functional description of the various features that may be present in computer system 300 rather than a structural schematic of the embodiments described herein. In practice, and as recognized by those of ordinary skill in the art, the functions of computer system 300 may be distributed over a large number of devices or computers, with various groups of the devices or computers performing particular subsets of the functions. In some embodiments, some or all of the functionality of computer system 300 may be implemented in one or more application-specific integrated circuits (*ASICs*) and/or one or more digital signal processors *(DSPs).*

Computer system 110 (FIG. 1), virtual world client 114 (FIG. 1), augmented reality client 120 (FIG. 1), and computer system 300 may include one of a variety of devices capable of manipulating computer-readable data or communicating such data between two or more electronic devices over a network, including: a computer terminal, a desktop computer, a laptop computer, a server, a mainframe computer, a kiosk, a portable electronic device (such as a cellular phone or *PDA*)*,* a server and/or a client computer (in a client-server architecture). Moreover, in FIG. 1 network 116 may include: the Internet, World Wide Web (*WWW*), an intranet, *LAN, WAN*, *MAN*,r a combination of networks, or other technology enabling communication between computing systems.

In some embodiments, system 100 (FIG. 1), computer system 300, and/or data structure 400 (FIG. 4) include fewer or additional components. Moreover, two or more components may be combined into a single component and/or a position of one or more components may be changed. Moreover, the functionality of the electronic devices and computer systems may be implemented more in hardware and less in software, or less in hardware and more in software, as is known in the art.

## Claims

1. A system, comprising:
a virtual reality system configured to display an object associated with a real-world object;
an augmented reality system configured to display the object based on a change to the state of the object; and
an object-state-maintaining mechanism configured to determine the state of the object and communicate a state change to the virtual reality system, the augmented reality system, or both;
wherein a respective state change of the object can be based on one or more of:
a state change of the real-world object;
a user input to the virtual reality system or the augmented reality system; and
an analysis of an image of the real-world object.

2. The system of claim 1, wherein the virtual reality system is configured to allow a user to manipulate the displayed object and communicate information indicative of a state change of the object corresponding to the user manipulation to the object-state-maintaining mechanism;
wherein the object-state-maintaining mechanism is configured to communicate the received information indicative of the state change to the augmented reality system; and
wherein the augmented reality system is configured to update the displayed object based on the received information indicative of the state change.

3. The system of claim 2, wherein the information indicative of the state change comprises a set of parameters which can be used to identify the object and a state of the object.

4. The system of any of the preceding claims, wherein the object-state-maintaining mechanism further comprises a scene recognition engine configured to determine a model for the object and communicate information indicative of the model to the virtual reality system, the augmented reality system, or both

5. The system of any of the preceding claims, wherein the augmented reality system comprises a machine vision mechanism configured to capture an image of the real-world object; and
wherein the augmented reality system is further configured to communicate the image or a set of parameters that can be used to identify the real-world object and a state of the real-world object to the object-state-maintaining mechanism.

6. The system of any of the preceding claims, wherein the virtual reality system and the augmented reality system are both configured to display the object in a three-dimension (3D) display environment.

7. The system of any of the preceding claims, wherein the object-state-maintaining mechanism resides in a server which is coupled to the virtual reality system and the augmented reality system via a network

8. A method, comprising:
displaying at a virtual reality system an object associated with a real-world object;
determining the state of the object by an object-state-maintaining mechanism based on one or more of:
a state change of the real-world object;
a user input; and
an analysis of an image of the real-world object;
communicating a state change of the object to an augmented reality system; and
displaying at the augmented reality system the object based on the state change.

9. The method of claim 8, further comprising:
allowing a user to manipulate the displayed object at the virtual reality system;
communicating information indicative of a state change of the object corresponding to the user manipulation from the virtual reality system to the object-state-maintaining mechanism;
communicating the received information indicative of the state change from the object-state-maintaining mechanism to the augmented reality system; and
updating the object which is displayed in the augmented reality system based on the received information indicative of the state change.

10. The method of claim 9, wherein the information indicative of the state change comprises a set of parameters which can be used to identify the object and a state of the object.

11. The method of any of claims 8 to 10, further comprising determining a model for the object and communicating information indicative of the model to the virtual reality system, the augmented reality system, or both.

12. The method of any of claims 8 to 11, further comprising:
capturing an image of the real-world object by a machine vision mechanism associated with the augmented reality system; and
communicating the image or a set of parameters which can be used to identify the real-world object and a state of the real-world object to the object-state-maintaining mechanism.

13. The method of any of claims 8 to 12, wherein the object is displayed in a three-dimension (3D) display environment.

14. The method of any of claims 8 to 13, wherein the object-state-maintaining mechanism resides in a server which is coupled to the virtual reality system and the augmented reality system via a network.

15. A computer readable non-transitory storage medium storing instructions which when executed by one or more computers cause the computer(s) to execute a method according to any of claims 8 to 14.
